# EUROPÄISCHE PATENTANMELDUNG

(11) **EP 4 115 970 A1**
(43) Veröffentlichungstag der Anmeldung: **11.01.2023**
(21) Anmeldenummer: 21183593.9
(22) Anmeldetag: 05.07.2021
(51) Int. Cl.: B01D 53/94, C11D 1/75, F01N 3/20, F01N 13/16

(54) **ADDITIV ZUR REINIGUNG VON SCR-SYSTEMEN**

(71) Anmelder: TUNAP GmbH & Co. KG, 82515 Wolfratshausen (DE)
(72) Erfinder: Knöthig, Volker, 82362 Weilheim in Oberbayern (DE); Lange, Alex, 85376 Fürholzen (DE); Pawlitschek, Sergej, 81673 München (DE)
(74) Vertreter: Dilg, Haeusler, Schindelmann Patentanwaltsgesellschaft mbH

(57) **Zusammenfassung**

Die vorliegende Erfindung betrifft die Verwendung eines polaren Lösungsmittels als Additiv zu einer Lösung, die eine bei über 200 °C Ammoniak freisetzende Komponente enthält, zur Entfernung von Ablagerungen oder Verunreinigungen in einem System zur selektiven katalytischen Reduktion, wobei das polare Lösungsmittel einen Siedepunkt bei 101,3 kPa von mindestens 140 °C aufweist. Die vorliegende Erfindung betrifft ferner ein Verfahren zur Entfernung von Ablagerungen oder Verunreinigungen in einem System zur selektiven katalytischen Reduktion und ein Verfahren zum Betreiben eines Systems zur selektiven katalytischen Reduktion.

## Beschreibung

### GEBIET DER ERFINDUNG

Die vorliegende Erfindung betrifft die Verwendung eines polaren Lösungsmittels als Additiv zu einer Ammoniak-freisetzenden Lösung zur Entfernung von Ablagerungen oder Verunreinigungen in einem System zur selektiven katalytischen Reduktion sowie Verfahren zur Entfernung von Ablagerungen oder Verunreinigungen in einem System zur selektiven katalytischen Reduktion und Verfahren zum Betreiben eines Systems zur selektiven katalytischen Reduktion.

### HINTERGRUND

Eines der großen Probleme, die durch Verbrennungsmotoren verursacht werden, sind Stickoxid- (NOx-) Emissionen. Auf EU-Ebene sind Mindestverpflichtungen zur Reduzierung der Gesamt-NOx Emissionen in der NEC-Richtlinie (EU2016/2284) geregelt. Diese sieht im Jahr 2020 eine Reduzierung um 39% gegenüber 2005 vor und bis 2030 um 65%. Die Erreichung dieses Wertes erfordert zwingend einen großen Beitrag aus jedem Bereich, in dem NOx emittiert wird. Für Verbrennungsmotoren bedeutet das, dass mit Systemen zur selektiven katalytischen Reduktion (SCR-Systemen) gearbeitet werden muss. Hierbei wird aus einer chemischen Verbindung (meist Harnstoff) unter Einsatztemperatur Ammoniak abgespalten oder anderweitig freigesetzt und dieser reagiert an einem Katalysatormaterial mit dem NOx zu Stickstoff (N2) und Wasser. Das Katalysatormaterial besteht je nach Einsatztemperatur meist aus vanadium- oder zeolithbasiertem Material.

Haupteinsatzgebiet der SCR-Systeme bei Verbrennungsmotoren sind Dieselmotoren in PKW, Nutz- und Schienenfahrzeugen und bei Schiffen. Zum Einsatz kommen meist Harnstofflösungen. Im maritimen Bereich mit einer Harnstoffkonzentration von 40% (ISO 18611) und in den anderen Bereichen mit 32,5% Harnstoff (DIN 70070 bzw. ISO 22241). In diesen Normen ist neben dem Harnstoffgehalt auch der Transport und die Fertigung beschrieben, welche Verunreinigungen in welchen Mengen enthalten sein dürfen und verschiedene andere physikalisch-chemische Kenngrößen, wie beispielsweise die Oberflächenspannung bei 20°C, die nach ISO 22241 mindestens 65 mN/m betragen muss. Für Kraftfahrzeuge hat sich insbesondere AdBlue^{®} etabliert, ein Handelsname bzw. eine Marke des Verbands der Automobilindustrie e.V. (VDA). Die Standardisierung hat den Vorteil, dass diese Normlösungen dem Verbraucher preiswert zur Verfügung gestellt werden können und zum anderen sind Parameter und enthaltene Stoffe so gut beschrieben, dass es nicht zu Katalysatorvergiftungen kommen kann bzw. zu Fehlfunktionen in den unterschiedlichen SCR-Konstruktionen.

Harnstoff zersetzt sich in einem SCR-System am Katalysator in einem ersten Schritt zu Ammoniak (NH3) und Isocyansäure (HNCO). Diese reagiert weiter mit Wasser zu Ammoniak und CO2. Der erzeugte Ammoniak reagiert weiter mit den aus dem Abgas zu entfernenden Stickoxiden zu Stickstoff und Wasser - also ungefährlichen Substanzen. Je nach Geometrie, Tröpfchenverteilung, Verweilzeit und Temperatur an verschiedenen Stellen des SCR-Systems können Nebenreaktionen der Isocyansäure stattfinden, die zu unerwünschten Ablagerungen führen. Typische Neben- bzw. Zersetzungsprodukte von Harnstoff bzw. Isocyansäure beinhalten Biuret, Cyanursäure, Ammelid, Ammelin und Melamin. Die Bildung von Ablagerungen aus den Nebenreaktionen der Harnstoffzersetzung ist abhängig von den Einsatzbedingungen (Außentemperatur, Fahr-/Last-/Bewegungsprofil) und wird nur in relativ wenigen Fällen beobachtet. In den meisten Fällen ist das System so konstruiert, dass es im normalen Betrieb wartungsfrei ist.

In den Fällen, in denen die Ablagerungsbildung einsetzt, führt das allerdings zu einer Veränderung der Oberfläche des SCR-Katalysators an verschiedenen Stellen und dies wiederum reduziert die Effizienz des Katalysators und somit des gesamten SCR-Systems. Im schlimmsten Fall treten Störungen auf, die Abgaswerte erfüllen nicht mehr die Norm und das Fahrzeug/die Maschine muss außer Betrieb gesetzt werden. Es kann dann eine aufwändige Reinigung oder gar ein Bauteilwechsel notwendig sein. Dies führt zu erheblichen Kosten und Ressourcenverschwendung durch Reinigung bzw. Teiletausch und durch das benötigte Ersatzfahrzeug bzw. die Ersatzmaschine.

In der Literatur sind verschiedene Lösungsansätze beschrieben, die alle darauf beruhen, dass bei einer Daueranwendung die Entstehung von Ablagerungen vermindert bzw. unterdrückt wird (sogenannter *keep clean-Ansatz*)*.*

In der WO 94/08893 wird beschrieben, wie durch den Zusatz von oberflächenaktiven Substanzen die Partikelgröße der eingespritzten Harnstofflösung reduziert werden kann. Daraus soll eine verringerte Ablagerungsbildung resultieren. Beschrieben ist eine große Zahl an anionischen, kationischen und nicht ionischen oberflächenaktiven Verbindungen, der Fokus liegt aber auf Alkoholethoxylaten.

Die WO 2008/125745 A2 beschreibt den Zusatz eines "multifunktionalen" Stoffes mit einem HLB-Wert von 7 bis 17 zu einer Ammoniak-freisetzenden Lösung, um speziell die Bildung von Cyanursäure-basierten Ablagerungen zu vermindern.

In der EP 2 337 625 B1 wird beschrieben, wie eine Mischung aus zwei unterschiedlich stark ethoxylierten Alkoholen ebenfalls die Partikelgröße einer eingespritzten Harnstofflösung verringern kann und gleichzeitig bei tiefen Temperaturen keine Bildung von Trübungen (Löslichkeitsprobleme) stattfindet.

Die EP 2 488 283 B1 beschreibt den Zusatz eines Additives, bestehend aus einer Kohlenwasserstoffkette und einem ethoxylierten Teil. Dieses Additiv soll ebenfalls die Bildung von nicht näher beschriebenen Ablagerungen aus einer 32,5%igen Harnstofflösung im SCR-Katalysator reduzieren.

Alle diese Vorschläge basieren aber auf dem *keep clean-Ansatz,* also der Vermeidung der Entstehung neuer Ablagerungen, so dass die genannten Additive weitestgehend permanent der Harnstofflösung beim Betrieb zugesetzt sein müssen und somit der Einsatz von preiswerter standardisierter Harnstofflösung in Wasser wie AdBlue^{®} nicht möglich ist.

Außerdem basieren die in der Literatur beschriebenen Problem-Lösungen auf dem Einsatz von oberflächenaktiven Substanzen, welche die Oberflächenspannung stark reduzieren. Das führt zum einen sehr schnell zu Schaumbildung und zum anderen dazu, dass die in der ISO-Norm 22241 vorgegebene Oberflächenspannung von 65mN/m bei 20°C zum Teil beträchtlich unterschritten wird. Beides gefährdet je nach Aufbau im Detail die zuverlässige Funktion des SCR-Katalysators. Schaumbildung kann insbesondere bei druckluftbasierten Dosiersystemen zu großen Problemen führen.

Es mag daher einen Bedarf geben, die vorstehend beschriebenen Probleme und Nachteile aus dem Stand der Technik zu überwinden. Insbesondere mag es einen Bedarf geben für ein Additiv zu einer Ammoniak-freisetzenden Lösung (wie AdBlue^{®}), das in der Lage ist, bereits bestehende Ablagerungen oder Verunreinigungen in einem System zur selektiven katalytischen Reduktion von Abgasen von mit Diesel betriebenen Verbrennungsmotoren zu entfernen, so dass das Additiv nicht dauerhaft, sondern nur bei Bedarf, insbesondere bei bereits vorhandener Verschmutzung, zugesetzt werden muss.

### ZUSAMMENFASSUNG DER ERFINDUNG

Eine Aufgabe der vorliegenden Erfindung ist es daher, ein Additiv für eine Ammoniak-freisetzende Lösung (wie AdBlue^{®}) zur Entfernung von (bereits bestehenden) Ablagerungen oder Verunreinigungen in einem System zur selektiven katalytischen Reduktion von Abgasen von mit Diesel betriebenen Verbrennungsmotoren bereitzustellen.

Ein solcher sogenannter *clean up*-Ansatz, also die Entfernung von vorhandenen Ablagerungen oder Verunreinigungen, ermöglicht eine Reinigung eines bereits verschmutzten SCR-Systems, ohne dass das Fahrzeug bzw. die Maschine außer Betrieb genommen werden muss und ohne dass das SCR-System oder Teile davon ausgetauscht werden müssen. Auch muss ein solches Additiv nicht dauerhaft der Ammoniak-freisetzenden Lösung zugesetzt werden, sondern das SCR-System kann die meiste Zeit mit einer kostengünstigen, standardisierten wässrigen Harnstofflösung wie AdBlue^{®} betrieben werden und das Clean up-Additiv braucht erst dann eingesetzt werden, zum Beispiel durch Zugabe zu der Harnstofflösung, sobald Verunreinigungen im SCR-System auftreten bzw. gebildet wurden. Gleichzeitig sollte die Oberflächenspannung und das Schaumverhalten der modifizierten Lösung möglichst nahe an dem Verhalten der ursprünglichen Harnstofflösung bleiben und die Normwerte eingehalten werden. Darüber hinaus sollte es sowohl in niedrigen als auch in hohen Konzentrationen eine gute Löslichkeit in handelsüblichen Harnstofflösungen wie Adblue^{®} besitzen und dort auch langzeitstabil sein.

Die Erfinder der vorliegenden Erfindung haben umfangreiche Studien zur Lösung dieser Aufgabe durchgeführt. Überraschenderweise hat sich gezeigt, dass die Reduzierung der Oberflächenspannung keine oder nur eine untergeordnete Rolle bei der Entfernung von vorhandenen Ablagerungen oder Verunreinigungen spielt. Der Zusatz eines Stoffes mit Tensidcharakter ist demnach für Clean Up-Behandlungen nicht notwendig bzw. wegen des einhergehenden Schaumverhaltens sogar eher nachteilig.

Vielmehr haben sich spezielle polare Lösungsmittel mit einem relativ hohen Siedepunkt als für die obengenannten Zwecke und die Lösung der Aufgabe geeignete Additive erwiesen, die zudem nur in relativ geringen Mengen einer Ammoniak-freisetzende Lösung (wie AdBlue^{®}) zugesetzt werden müssen, um für eine effektive Entfernung von bestehenden Ablagerungen oder Verunreinigungen in einem SCR-System zu sorgen.

Die vorliegende Erfindung betrifft dementsprechend die Verwendung eines polaren Lösungsmittels als Additiv zu einer Lösung, die eine bei über 200 °C Ammoniak freisetzende Komponente enthält, zur Entfernung von (bestehenden) Ablagerungen oder Verunreinigungen in einem System zur selektiven katalytischen Reduktion (von mit Diesel betriebenen Verbrennungsmotoren), wobei das polare Lösungsmittel einen Siedepunkt (Siedetemperatur) bei 101,3 kPa von mindestens 140 °C aufweist.

Des Weiteren betrifft die vorliegende Erfindung ein Verfahren zur Entfernung von Ablagerungen oder Verunreinigungen in einem System zur selektiven katalytischen Reduktion (von Abgasen (von mit Diesel betriebenen Verbrennungsmotoren)), wobei das System mit einer Lösung, die eine bei über 200 °C Ammoniak freisetzende Komponente enthält, betrieben wird, wobei die Lösung ferner ein polares Lösungsmittel mit einem Siedepunkt bei 101,3 kPa von mindestens 140 °C enthält.

Ferner betrifft die vorliegende Erfindung ein Verfahren zum Betreiben eines Systems zur selektiven katalytischen Reduktion (von Abgasen (von mit Diesel betriebenen Verbrennungsmotoren)), wobei das Verfahren ein Injizieren einer Lösung, die eine bei über 200 °C Ammoniak freisetzende Komponente enthält, in das System, wobei die Lösung ferner ein polares Lösungsmittel mit einem Siedepunkt bei 101,3 kPa von mindestens 140 °C enthält, und ein Erhitzen der Lösung auf eine Temperatur über 200 °C in dem System umfasst.

Weitere Aufgaben und Vorteile von Ausführungsformen der vorliegenden Erfindung werden an Hand der folgenden detaillierten Beschreibung und der beigefügten Abbildungen ersichtlich.

### KURZE BESCHREIBUNG DER ABBILDUNGEN

Abbildung 1 zeigt Fotografien eines SCR-Systems vor (Abb. 1A) und nach (Abb. 1B) dem Zusatz eines erfindungsgemäßen Additivs zu einer Harnstofflösung.

Abbildung 2 zeigt Untersuchungsergebnisse zur Abhängigkeit der Oberflächenspannung einer AdBlue^{®} Harnstofflösung von der zugesetzten Menge eines erfindungsgemäßen Additivs.

### DETAILLIERTE BESCHREIBUNG DER ERFINDUNG

Im Folgenden werden nähere Details der vorliegenden Erfindung und weitere Ausführungsformen davon beschrieben. Die vorliegende Erfindung ist jedoch nicht auf die folgende detaillierte Beschreibung beschränkt, sondern sie dient lediglich der Veranschaulichung der erfindungsgemäßen Lehren.

Es sei darauf hingewiesen, dass Merkmale, die im Zusammenhang mit einer beispielhaften Ausführungsform beschrieben werden, mit jeder anderen beispielhaften Ausführungsform kombiniert werden können. Insbesondere können Merkmale, die im Zusammenhang mit einer beispielhaften Ausführungsform einer erfindungsgemäßen Verwendung beschrieben werden, mit jeder anderen beispielhaften Ausführungsform einer erfindungsgemäßen Verwendung sowie mit jeder beispielhaften Ausführungsform eines erfindungsgemäßen Verfahrens kombiniert werden und umgekehrt, sofern nicht ausdrücklich etwas anderes vermerkt ist.

Wenn ein Begriff mit einem unbestimmten oder bestimmten Artikel, wie zum Beispiel "ein", "eine", "eines", "der", "die" und "das", im Singular bezeichnet wird, schließt dies auch den Begriff im Plural mit ein und umgekehrt, sofern der Kontext nicht eindeutig anderes festlegt. Die Ausdrücke "aufweisen" bzw. "umfassen", wie sie hier verwendet werden, schließen nicht nur die Bedeutung von "enthalten" oder "beinhalten" ein, sondern können auch "bestehen aus" und "im Wesentlichen bestehen aus" bedeuten.

In einem ersten Aspekt betrifft die vorliegende Erfindung die Verwendung eines polaren Lösungsmittels als (Clean-up) Additiv zu einer Lösung, die eine bei über 200 °C Ammoniak freisetzende Komponente enthält, zur Entfernung von Ablagerungen oder Verunreinigungen in einem System zur selektiven katalytischen Reduktion (SCR-System).

Der Ausdruck "Clean up", wie er hierin verwendet wird, bedeutet insbesondere eine Entfernung von vorhandenen oder bereits bestehenden Ablagerungen oder Verunreinigungen, im Unterschied zu "keep clean", also der Vermeidung der Entstehung neuer Ablagerungen oder Verunreinigungen.

Der Ausdruck "polar", wie er hierin verwendet wird, bedeutet insbesondere, dass das so bezeichnete Lösungsmittel eine gewisse Polarität, zum Beispiel ein (permanentes) elektrisches Dipolmoment von mindestens 5 x 10⁻³⁰ Cm aufweist, im Unterschied zu einem apolaren oder hydrophoben Lösungsmittel, wie zum Beispiel einem Kohlenwasserstoff. Das polare Lösungsmittel kann dabei protisch oder auch aprotisch sein.

Unter einem "Lösungsmittel" wird im Rahmen der vorliegenden Anmeldung insbesondere eine chemische Verbindung verstanden, die in der Lage ist, andere Komponenten, insbesondere Neben- oder Zersetzungsprodukte von Harnstoff bzw. Isocyansäure oder andere Ablagerungen oder Verunreinigungen, die in einem SCR-System entstehen können, zu lösen oder zumindest anzulösen.

Das polare Lösungsmittel ist insbesondere dadurch gekennzeichnet, dass es einen Siedepunkt (bzw. eine Siedetemperatur) bei 101,3 kPa (Normaldruck) von mindestens 140 °C aufweist. Gemäß einer beispielhaften Ausführungsform hat das polare Lösungsmittel einen Siedepunkt bei 101,3 kPa von mindestens 150 °C, insbesondere von mindestens 160 °C, insbesondere von mindestens 180 °C, insbesondere von mindestens 200 °C. In vorteilhafter Weise liegt das polare Lösungsmittel in flüssiger Form bei der Betriebstemperatur des SCR-Systems. Hierdurch können Ablagerungen oder Verunreinigungen in dem SCR-System besonders effektiv durch das polare Lösungsmittel entfernt werden. Der maximale Siedepunkt des polaren Lösungsmittels bei 101,3 kPa ist nicht besonders eingeschränkt und beträgt vorzugsweise weniger als 500 °C, insbesondere weniger als 400 °C.

Gemäß einer beispielhaften Ausführungsform weist das polare Lösungsmittel ein (permanentes) elektrisches Dipolmoment von mindestens 5 x 10⁻³⁰ Cm auf. Das elektrische Dipolmoment und insbesondere das permanente elektrische Dipolmoment ist ein Maß für die Polarität eines Moleküls, die meist durch polare Atombindungen (z.B. auf Grund unterschiedlicher Elektronegativitäten der beteiligten Atome) oder auch durch Ladungen (z.B. im Fall von zwitterionischen Verbindungen) hervorgerufen wird. Insbesondere kann das polare Lösungsmittel ein (permanentes) elektrisches Dipolmoment von mindestens 5,5 x 10⁻³⁰ Cm, insbesondere von mindestens 6 x 10⁻³⁰ Cm, insbesondere von mindestens 6,5 x 10⁻³⁰ Cm, insbesondere von mindestens 7 x 10⁻³⁰ Cm, aufweisen.

Gemäß einer beispielhaften Ausführungsform ist das polare Lösungsmittel in einem Konzentrationsbereich von 10 ppm bis 50 Gew.-% (50% (m/m)) mit Wasser (bei 20 °C und/oder 101,3 kPa) mischbar, insbesondere ohne Bildung von (zwei oder mehr) Phasen, Trübungen oder einer Emulsion.

Gemäß einer beispielhaften Ausführungsform ist das polare Lösungsmittel so konfiguriert, dass eine Oberflächenspannung einer Lösung von 32,5 Gew.-% Harnstoff und 100 ppm des polaren Lösungsmittels in Wasser bei einer Temperatur von 20 °C (und einem Druck von 101,3 kPa) mindestens 55 mN/m, insbesondere mindestens 60 mN/m, insbesondere mindestens 65 mN/m, beträgt. Mit anderen Worten kann das polare Lösungsmittel so konfiguriert sein, dass bei einem Zusatz von 100 ppm davon zu einer Lösung von 32,5 Gew.-% Harnstoff in Wasser die Oberflächenspannung der Lösung nicht auf unter 55 mN/m, insbesondere nicht auf unter 60 mN/m, insbesondere nicht auf unter 65 mN/m, gesenkt wird, was im Hinblick auf eine (weitgehende) Einhaltung der ISO-Norm 22241 von Vorteil ist.

Gemäß einer beispielhaften Ausführungsform zeichnet sich das polare Lösungsmittel durch ein geringes Schaumbildungspotential bei der Verwendung in einer wässrigen Harnstofflösung wie AdBlue^{®} oder einer anderen Ammoniak-freisetzenden Lösung aus.

Gemäß einer beispielhaften Ausführungsform ist das polare Lösungsmittel ausgewählt aus der Gruppe, bestehend aus Aminoxiden, organischen Carbonaten, Kondensationsprodukten von Carbonsäuren mit Sarkosin, Glucosiden, Polyalkylenglycolen, Glycolethern, Alkoholen, Aminoalkoholen und Mischungen davon. Geeignete Aminoxide beinhalten insbesondere Oxide tertiärer aliphatischer Amine, insbesondere C2-C22-Alkyl-Aminoxide, wie zum Beispiel N,N-Dimethyl-C6-C14-Alkylamin-N-oxide. Geeignete organische Carbonate beinhalten insbesondere Propylencarbonat. Geeignete Kondensationsprodukte von Carbonsäuren mit Sarkosin beinhalten insbesondere Kondensationsprodukte von Fettsäuren (insbesondere C2-C22-Fettsäuren) mit Sarkosin, optional neutralisiert mit Aminen oder Aminoalkoholen. Geeignete Polyalkylenglycole beinhalten insbesondere Polyalkylenglycole mit einem Verhältnis von Ethoxyl- zu Propoxylgruppen von mindestens 2:1 und Polyethylenglycole (zum Beispiel mit einer mittleren Molekülmasse von 200 bis 800 g/mol). Geeignete Glycolether beinhalten insbesondere Dipropylenglycol n-Propylether, Dipropylenglycol n-Butylether, Propylenglycol n-Butylether, Propylenglycol n-Propylether, Tripropylenglycol n-Butylether, Propylenglycol Phenylether, Dipropylenglycol Phenylether, Dipropylenglycol Dimethylether, Propylenglycol Methylether, Propylenglycol Methyletheracetat, Dipropylenglycol Methylether, Dipropylenglycol Methyletheracetat, Tripropylenglycol Methylether, Ethylenglycol Hexylether, Diethylenglycol Hexylether, Ethylenglycol Propylether, Diethylenglycol Phenylether, Ethylenglycol Phenylether, Poly(oxy-1,2-ethandiyl) α-Phenyl-ω-hydroxy, Diethylenglycol Ethylether, Diethylenglycol n-Butylether und Ethylenglycol n-Butylether. Geeignete Alkohole beinhalten insbesondere 3-Methoxy-3-Methyl-1-Butanol. Geeignete Aminoalkohole beinhalten insbesondere Triethanolamin. Mischungen von zwei oder mehr der genannten polaren Lösungsmittel sind ebenfalls geeignet.

Gemäß einer beispielhaften Ausführungsform ist das polare Lösungsmittel ausgewählt aus der Gruppe, bestehend aus N,N-Dimethyldecylamin-N-oxid, Propylencarbonat, Polyethylenglycol, 3-Methoxy-3-Methyl-1-Butanol, Triethanolamin und Mischungen davon. Insbesondere N,N-Dimethyldecylamin-N-oxid hat sich als besonders geeignet für eine effektive Entfernung von bestehenden Ablagerungen oder Verunreinigungen in einem SCR-System-

Gemäß einer beispielhaften Ausführungsform enthält die Lösung, die eine bei über 200 °C Ammoniak freisetzende Komponente enthält, das polare Lösungsmittel in einer Menge (Konzentration) von 10 bis 5000 ppm, insbesondere von 20 bis 1000 ppm, insbesondere von 50 bis 500 ppm, insbesondere von 75 bis 400 ppm, insbesondere von 100 bis 200 ppm. Mengen über 5000 ppm sind zwar ebenfalls gut geeignet, bringen aber in der Regel keine weitere Verbesserung bei der Entfernung von Ablagerungen oder Verunreinigungen mit sich.

Gemäß einer beispielhaften Ausführungsform umfasst die bei über 200 °C Ammoniak freisetzende Komponente Harnstoff oder ein Derivat davon.

Gemäß einer beispielhaften Ausführungsform ist die Lösung, die eine bei über 200 °C Ammoniak freisetzende Komponente enthält, eine wässrige Harnstofflösung, insbesondere mit einer Konzentration von 31 bis 34 Gew.-% Harnstoff, insbesondere vom etwa 32,5 Gew.-% Harnstoff, oder aber auch - zum Beispiel bei Anwendungen im maritimen Bereich - mit einer Konzentration von 38 bis 42 Gew.-% Harnstoff, insbesondere vom etwa 40 Gew.-% Harnstoff.

In einem weiteren Aspekt betrifft die vorliegende Erfindung ein Verfahren zur Entfernung von Ablagerungen oder Verunreinigungen in einem System zur selektiven katalytischen Reduktion (insbesondere von Abgasen von mit Diesel betriebenen Verbrennungsmotoren), wobei das System mit einer Lösung, die eine bei über 200 °C Ammoniak freisetzende Komponente enthält, betrieben wird, wobei die Lösung ferner ein polares Lösungsmittel mit einem Siedepunkt bei 101,3 kPa von mindestens 140 °C enthält.

Gemäß einer beispielhaften Ausführungsform kann hierbei ein polares Lösungsmittel wie oben näher angegeben eingesetzt werden.

Gemäß einer beispielhaften Ausführungsform enthält die Lösung, die eine bei über 200 °C Ammoniak freisetzende Komponente enthält, das polare Lösungsmittel in einer Menge (Konzentration) von 10 bis 5000 ppm, insbesondere von 20 bis 1000 ppm, insbesondere von 50 bis 500 ppm, insbesondere von 75 bis 400 ppm, insbesondere von 100 bis 200 ppm.

In noch einem weiteren Aspekt betrifft die vorliegende Erfindung ein Verfahren zum Betreiben eines Systems zur selektiven katalytischen Reduktion (insbesondere von Abgasen von mit Diesel betriebenen Verbrennungsmotoren), wobei das Verfahren ein Injizieren einer Lösung, die eine bei über 200 °C Ammoniak freisetzende Komponente enthält, in das System, wobei die Lösung ferner ein polares Lösungsmittel mit einem Siedepunkt bei 101,3 kPa von mindestens 140 °C enthält, und ein Erhitzen der Lösung auf eine Temperatur über 200 °C in dem System umfasst. Hierdurch kann insbesondere eine Entfernung von Ablagerungen oder Verunreinigungen in dem SCR-System erreicht werden

Gemäß einer beispielhaften Ausführungsform kann hierbei ein polares Lösungsmittel wie oben näher angegeben eingesetzt werden.

Gemäß einer beispielhaften Ausführungsform enthält die Lösung, die eine bei über 200 °C Ammoniak freisetzende Komponente enthält, das polare Lösungsmittel in einer Menge (Konzentration) von 10 bis 5000 ppm, insbesondere von 20 bis 1000 ppm, insbesondere von 50 bis 500 ppm, insbesondere von 75 bis 400 ppm, insbesondere von 100 bis 200 ppm.

Die vorliegende Erfindung wird weiterhin an Hand der folgenden Beispiele beschrieben, die aber lediglich der Verdeutlichung der erfindungsgemäßen Lehren dienen und in keiner Weise den Umfang der vorliegenden Erfindung beschränken sollen.

### Beispiele

Untersuchungen zum Clean up-Verhalten verschiedener Additive in einem SCR-System

Untersuchte Additive:
- N,N-Dimethyldecylamin-N-oxid (Beispiel 1)
- Polyethylenglycol 400 (Beispiel 2)
- C9 - C11 Fettalkoholethoxylat mit 8 Ethoxyleinheiten (Vergleichsbeispiel 1)

Es wurden Mischungen von AdBlue^{®} mit jeweils 100 ppm der untersuchten Additive hergestellt und die Oberflächenspannung der erhaltenen Mischungen bei 20 °C bestimmt. Für reines AdBlue^{®} (d.h. ohne Additivzusatz) wurde eine Oberflächenspannung bei 20 °C von 73,0 mN/m ermittelt. Zusätzlich wurde das Clean up-Verhalten der Mischungen in einem stark von Ablagerungen belasteten SCR-System untersucht, wobei das Vorhandensein von Ablagerungen durch optische Beurteilung auf einer Skala von 0 (sauber) bis 4 (stark verschmutzt) ausgewertet wurde.

Die Ergebnisse der Untersuchungen sind in Tabelle 1 wiedergegeben:

**[Tabelle 1]**

| | Beispiel 1 | Beispiel 2 | Vergleichsbeispiel 1 |
|---|---|---|---|
| Oberflächenspannung der Mischung bei 20 °C [mN/m] | 57,1 | 73,0 | 28,2 |
| Optische Beurteilung der Ablagerungen vor dem Einsatz der Mischung | 3 | 4 | 4 |
| Optische Beurteilung der Ablagerungen nach dem Einsatz der Mischung | 0 | 1 | 2 |

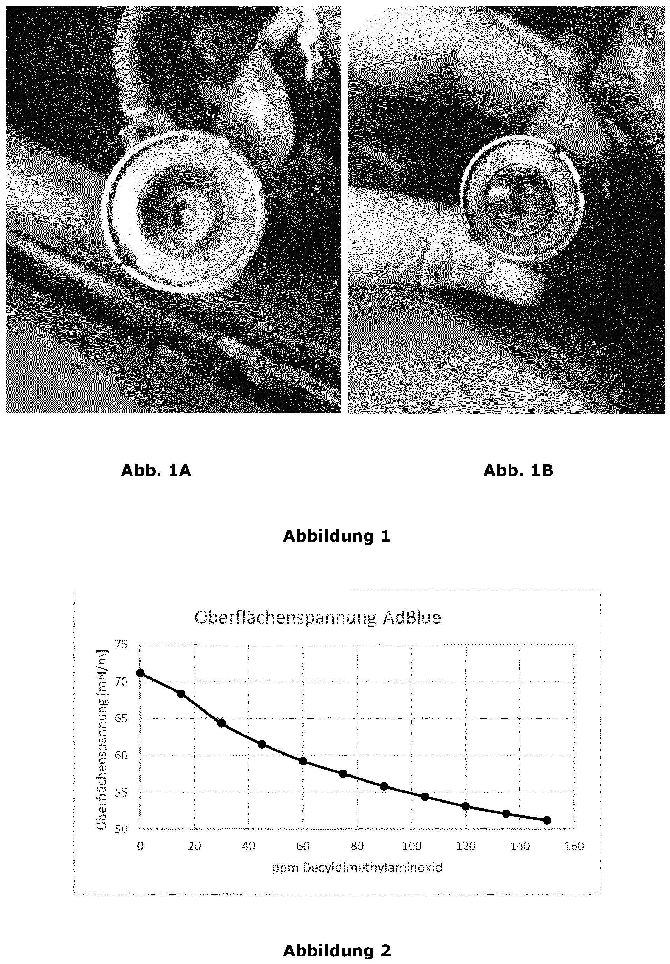

Beim Einsatz von 100 ppm N,N-Dimethyldecylamin-N-oxid (Beispiel 1) wurde nur eine geringe Absenkung der Oberflächenspannung unter den Normwert von 65mN/m und ein sehr geringes Schaumverhalten der resultierenden Lösung in der realen Anwendung beobachtet. Es konnte aber ein erhebliches Clean Up-Verhalten in einem sehr von Ablagerungen belasteten realen SCR-System beobachtet werden. In **Abbildung 1** sind Fotografien des SCR-Systems vor (Abb. 1A) und nach (Abb. 1B) dem Einsatz der Mischung gemäß Beispiel 1 gezeigt.

Auch PEG 400 (Beispiel 2) hat sich als ein effizientes Additiv zum Entfernen von Anlagerungen in einem SCR-System erwiesen, das zudem zu keiner Absenkung der Oberflächenspannung von AdBlue^{®} führt, so dass der Normwert von 65mN/m eingehalten werden kann.

Die Untersuchungen haben ferner ergeben dass ein tensidischer Charakter des Additivs, wie bei Vergleichsbeispiel 1, sogar zu einer Verschlechterung des Clean Up-Verhaltens führt und zudem aufgrund einer starken Schaumentwicklung und einem starken Absenken der Oberflächenspannung von Nachteil ist.

Zusätzlich wurde die Abhängigkeit der Oberflächenspannung einer AdBlue^{®} Harnstofflösung von der zugesetzten Menge des erfindungsgemäßen Additivs N,N-Dimethyldecylamin-N-oxid untersucht. Die Untersuchungsergebnisse sind in **Abbildung 2** gezeigt. Wie daraus ersichtlich ist, führen auch höhere Konzentrationen dieses Additivs nur noch zu einer geringfügigen weiteren Absenkung der Oberflächenspannung.

Die vorliegende Erfindung wurde an Hand spezifischer Ausführungsformen und Beispiele beschrieben. Die Erfindung ist aber nicht hierauf beschränkt und verschiedene Modifikationen hiervon sind möglich, ohne den Umfang der vorliegenden Erfindung zu verlassen.

## Patentansprüche

1. Verwendung eines polaren Lösungsmittels als Additiv zu einer Lösung, die eine bei über 200 °C Ammoniak freisetzende Komponente enthält, zur Entfernung von Ablagerungen oder Verunreinigungen in einem System zur selektiven katalytischen Reduktion, wobei das polare Lösungsmittel einen Siedepunkt bei 101,3 kPa von mindestens 140 °C aufweist.

2. Verwendung nach Anspruch 1, wobei das polare Lösungsmittel ein elektrisches Dipolmoment von mindestens 5 x 10⁻³⁰ Cm aufweist.

3. Verwendung nach Anspruch 1 oder 2, wobei das polare Lösungsmittel in einem Konzentrationsbereich von 10 ppm bis 50 Gew.-% mit Wasser ohne Bildung von Phasen, Trübungen oder einer Emulsion mischbar ist.

4. Verwendung nach einem der vorhergehenden Ansprüche, wobei das polare Lösungsmittel so konfiguriert ist, dass eine Oberflächenspannung einer Lösung von 32,5 Gew.-% Harnstoff und 100 ppm des polaren Lösungsmittels in Wasser bei 20 °C mindestens 55 mN/m, insbesondere mindestens 65 mN/m, beträgt.

5. Verwendung nach einem der vorhergehenden Ansprüche, wobei das polare Lösungsmittel ausgewählt ist aus der Gruppe, bestehend aus Aminoxiden, organischen Carbonaten, Kondensationsprodukten von Carbonsäuren mit Sarkosin, Glucosiden, Polyalkylenglycolen, Glycolethern, Alkoholen, Aminoalkoholen und Mischungen davon.

6. Verwendung nach einem der vorhergehenden Ansprüche, wobei das polare Lösungsmittel ausgewählt ist aus der Gruppe, bestehend aus N,N-Dimethyldecylamin-N-oxid, Propylencarbonat, Polyethylenglycol, 3-Methoxy-3-Methyl-1-Butanol, Triethanolamin und Mischungen davon.

7. Verwendung nach einem der vorhergehenden Ansprüchen, wobei das polare Lösungsmittel einen Siedepunkt bei 101,3 kPa von mindestens 160 °C, insbesondere mindestens 180 °C aufweist.

8. Verwendung nach einem der vorhergehenden Ansprüche, wobei die Lösung, die eine bei über 200 °C Ammoniak freisetzende Komponente enthält, das polare Lösungsmittel in einer Menge von 10 bis 5000 ppm enthält.

9. Verwendung nach einem der vorhergehenden Ansprüche, wobei die bei über 200 °C Ammoniak freisetzende Komponente Harnstoff oder ein Derivat davon umfasst.

10. Verwendung nach einem der vorhergehenden Ansprüche, wobei die Lösung, die eine bei über 200 °C Ammoniak freisetzende Komponente enthält, eine wässrige Harnstofflösung, insbesondere mit einer Konzentration von 31 bis 34 Gew.-% Harnstoff, ist.

11. Verfahren zur Entfernung von Ablagerungen oder Verunreinigungen in einem System zur selektiven katalytischen Reduktion, wobei das System mit einer Lösung, die eine bei über 200 °C Ammoniak freisetzende Komponente enthält, betrieben wird, wobei die Lösung ferner ein polares Lösungsmittel mit einem Siedepunkt bei 101,3 kPa von mindestens 140 °C enthält.

12. Verfahren zum Betreiben eines Systems zur selektiven katalytischen Reduktion, wobei das Verfahren Folgendes umfasst:
Injizieren einer Lösung, die eine bei über 200 °C Ammoniak freisetzende Komponente enthält, in das System, wobei die Lösung ferner ein polares Lösungsmittel mit einem Siedepunkt bei 101,3 kPa von mindestens 140 °C enthält, und
Erhitzen der Lösung auf eine Temperatur über 200 °C in dem System.

13. Verfahren nach Anspruch 11 oder 12, wobei das polare Lösungsmittel wie in einem der Ansprüche 2 bis 7 definiert ist.

14. Verfahren nach einem der Ansprüche 11 bis 13, wobei die Lösung, die eine bei über 200 °C Ammoniak freisetzende Komponente enthält, das polare Lösungsmittel in einer Menge von 10 bis 5000 ppm enthält.
